# EUROPEAN PATENT SPECIFICATION

(11) **EP 4 588 764 B1**
(45) Date of publication and mention of the grant of the patent: **11.11.2026**
(21) Application number: 24152226.7
(22) Date of filing: 16.01.2024
(51) Int. Cl.: B62D 33/07

(54) **SAFETY RETAINER FOR A CABIN OF A VEHICLE, VEHICLE COMPRISING SUCH A SAFETY RETAINER AND METHOD FOR PERFORMING MAINTENANCE OF SUCH A VEHICLE**
SICHERHEITSHALTERUNG FÜR EINE KABINE EINES FAHRZEUGS, FAHRZEUG MIT SOLCH EINER SICHERHEITSHALTERUNG UND VERFAHREN ZUR DURCHFÜHRUNG DER WARTUNG SOLCH EINES FAHRZEUGS
DISPOSITIF DE RETENUE DE SÉCURITÉ POUR UNE CABINE DE VÉHICULE, VÉHICULE COMPRENANT UN TEL DISPOSITIF DE RETENUE DE SÉCURITÉ ET PROCÉDÉ POUR EFFECTUER LA MAINTENANCE D'UN TEL VÉHICULE

(43) Date of publication of application: 23.07.2025
(73) Proprietor: Volvo Truck Corporation, 405 08 Göteborg (SE)
(72) Inventor: GIBOUDEAU, Julien, 69580 SATHONAY VILLAGE (FR)
(74) Representative: Lavoix

(56) References cited:
- EP-A2- 0 732 256
- CZ-U1- 8 472
- DE-A1- 2 633 361

## Description

### TECHNICAL FIELD

The disclosure relates generally to vehicles, in particular terrestrial vehicles. In particular aspects, the disclosure relates to a safety retainer for a cabin of a vehicle, a vehicle comprising such a safety retainer and a method for performing maintenance of such a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

To perform maintenance operations such as repairs, checks and/or inspections of vehicles such as heavy-duty vehicles, it can be necessary to access elements or machinery located below a cabin of the vehicle. This is generally the case for vehicles such as trucks, where the motor may be located below the cabin. In this case, it is necessary to pivot the cabin from an initial position to a tilted position, to make the motor and/or other elements of the truck accessible. However, there is a risk of the cabin pivoting back into its initial position, which may cause injury to a user or material damage to the vehicle. Current systems made to prevent the cabin from pivoting back into its initial position include using a retainer bar. However, the retainer bar needs to be secured by the user, both to a chassis of the truck and to the cabin. This causes safety risks, as securing the retainer bar is a long process, which may be improperly performed by the user. Furthermore, when the retainer bar is not in use, it is not secured to the truck, and may be lost. Therefore, an aim of the invention solve these problems by disclosing a mechanism that is easy to use and safer than existing solutions. Document DE 26 33 361 A1 discloses the features of the preamble of claims 1 and 12.

### SUMMARY

According to a first aspect of the disclosure, the invention relates to a safety retainer, for a cabin of a vehicle, the safety retainer comprising:
- a retainer bar, configured to be secured to a chassis of the vehicle, the retainer bar being pivotable between an operative position and an inoperative position;
- a member secured to the retainer bar and extending transversally from the retainer bar; and
- a locking mechanism, configured to be secured to the chassis of the vehicle, the locking mechanism comprising:
   - a main hook, movable between a first main hook position a second main hook position;
   - a hydraulic actuator, configured to move the main hook from the first main hook position to the second main hook position; and
   - a main spring, exerting a first load on the main hook to bias the main hook in the first main hook position,
   the safety retainer being movable between:
   - a locking configuration, wherein the retainer bar is in the inoperative position, the main hook is in the first main hook position and is engaged with the member to lock the retainer bar in the inoperative position, and
   - an unlocking configuration, wherein the main hook is in the second main hook position and at a distance from the member, and the retainer bar is configured to pivot from the inoperative position to the operative position and from the operative position to the inoperative position.

The first aspect of the disclosure may seek to disclose a safety retainer that is easy to use and safer than existing solutions. A technical benefit may include making the use of the retainer bar easier, as it does not need to be fixed to the chassis by the user, since it is already secured to the chassis. In addition to this, the risk of the retainer bar falling or untimely pivoting in the operative position is reduced, as the main hook locks the retainer bar in place when it is in the inoperative position.

Optionally in some examples, including in at least one preferred example, the main hook comprises a central member, and a leg extending from the central member and the hydraulic actuator is configured to push the leg to move the main hook from the first main hook position to the second main hook position. A technical benefit may include moving the main hook in an easy an automated manner, so that the user does not have to move the hook himself.

Optionally in some examples, including in at least one preferred example, the safety retainer is further movable in a stand-by configuration, wherein the retainer bar is in the operative position, the main hook is in the first main hook position and at a distance from the member. A technical benefit may include preventing untimely engagement of the member and the main hook.

Optionally in some examples, including in at least one preferred example:
- the locking mechanism further comprises an auxiliary hook, movable between a first auxiliary hook position and a second auxiliary hook position;
- in the locking configuration, the auxiliary hook is in the first auxiliary hook position and is engaged with the member to lock the retainer bar in the inoperative position, in addition to the main hook being in the first main hook position and engaged with the member; and
- in the unlocking configuration the auxiliary hook is in the first auxiliary hook position, is at a distance from the member and the retainer bar is configured to pivot in the operative position and in the inoperative position, in addition to the main hook being in the second main hook position and at a distance from the member.

A technical benefit may include improving safety for a user, in case of a failure of the main hook, but also when the main hook is in the second main hook position and does not lock the retainer bar in the inoperative position, the auxiliary hook still prevents the retainer bar to move from the inoperative position, as the retainer bar moving could cause injury to the user or damage to the vehicle.

Optionally in some examples, including in at least one preferred example, the auxiliary hook comprises a sliding surface, and the member is configured to slide on the sliding surface when the retainer bar pivots from the operative position to the inoperative position. A technical benefit may include making the movement from the operative position to the inoperative position easier.

Optionally in some examples, including in at least one preferred example, the locking mechanism further comprises an auxiliary spring, exerting a second load on the auxiliary hook to bias the auxiliary hook in the first auxiliary position. A technical benefit may include improving safety for a user, as when the main hook is in the second main hook position and does not lock the retainer bar in the inoperative position, the auxiliary hook still prevents the retainer bar from moving out of the inoperative position by exerting the second load on the auxiliary hook and therefore on the member.

Optionally in some examples, including in at least one preferred example, the first load is superior to the second load. A technical benefit may include, while increasing the safety of the user by preventing the retainer bar to untimely move from the inoperative position when the main hook is in the second main hook position, to make it possible for the user to manually move the retainer bar. In particular, the second load can be overcome by the user pushing or pulling on the retainer bar. The retainer bar is thus locked only against untimely movement from the inoperative position, but not against voluntary movement of the retainer bar.

Optionally in some examples, including in at least one preferred example, in the stand-by configuration, the auxiliary hook is in the first auxiliary hook position and at a distance from the member, in addition to the main hook being in the first main hook position and at a distance from the member and the retainer bar being in the operative position. A technical benefit may include preventing untimely engagement of both the main hook and the auxiliary hook with the member.

According to a second aspect of the disclosure, the invention relates to a vehicle comprising:
- a chassis;
- a cabin, secured to the chassis, the cabin being configured to pivot in an upright position, in a fully tilted position and in a tilted position; and
- the safety retainer previously described, wherein the retainer bar and the locking mechanism are secured to the chassis.

The second aspect of the disclosure may seek to provide a vehicle which is easy to service and safer than existing vehicles.

A technical benefit may include having a vehicle with a retainer bar that is easier to use, as it does not need to be fixed to the chassis by the user, since it is already secured to the chassis. In addition to this, the risk of the retainer bar falling or untimely pivoting in the operative position is reduced, as the main hook locks the retainer bar in place when it is in the inoperative position.

Optionally in some examples, including in at least one preferred example, a tilt angle of the cabin in the fully tilted position is superior to the tilt angle of the cabin in the tilted position. A technical benefit may include having different positions to facilitate moving the retainer bar in the operative position so it can come in contact with the cabin more easily.

Optionally in some examples, including in at least one preferred example, the tilt angle of the cabin in the fully tilted position is inferior to 90°. A technical benefit may include that the cabin, if not supported, pivots back in the upright position. It is therefore not necessary to exert force to pull the cabin from the fully tilted position to the tilted position, but only to prevent it from pivoting back in the upright position, which makes pivoting of the cabin simpler.

Optionally in some examples, including in at least one preferred example, when the cabin is in the upright position, the retainer bar is in the inoperative position and, when the cabin is in the tilted position, the retainer bar in the operative position. A technical benefit may include when the retainer bar is in the operative position it supports the cabin, therefore preventing the cabin from pivoting from the tilted position to the upright position, and when the retainer bar is in the inoperative position, it is not in contact with the cabin, so as not to cause damage to the cabin.

Optionally in some examples, including in at least one preferred example, the vehicle further comprises a cabin hydraulic circuit, configured to pivot the cabin from the upright position to the fully tilted position, from the fully tilted position to the tilted position and vice versa. A technical benefit may include making the pivoting of the cabin easier for the user.

Optionally in some examples, including in at least one preferred example, the hydraulic actuator is fluidically connected to the cabin hydraulic circuit. A technical benefit may include limiting the number of independent hydraulic circuits in the vehicle, and making retrofitting of existing vehicles easier, by connecting the hydraulic actuator to the already existing cabin hydraulic circuit.

Optionally in some examples, including in at least one preferred example, the retainer bar further comprises a handle, and the handle is configured to be accessible by a user from outside the vehicle. A technical benefit may include making the handling of the retainer bar easier and safer for the user, as the user does not have to climb on the vehicle to access the handle to move the retainer bar.

According to a third aspect of the disclosure, the invention relates to a method for performing maintenance of a vehicle, the vehicle comprising :
- a chassis;
- a cabin, secured to the chassis, the cabin being configured to pivot in an upright position, in a fully tilted position and in a tilted position; and
- a safety retainer comprising a retainer bar, secured to the chassis, the retainer bar being pivotable between an operative position and an inoperative position, the safety retainer comprising a member secured to the retainer bar and extending transversally from the retainer bar and extending transversally from the retainer bar, the safety retainer further comprising a locking mechanism secured to the chassis, the locking mechanism comprising:
   - a main hook, movable between a first main hook position and a second main hook position;
   - a hydraulic actuator, configured to move the main hook from the first main hook position to the second main hook position; and
   - a main spring, exerting a first load on the main hook to bias the main hook in the first main hook position,
   the safety retainer being movable between:
   - a locking configuration, wherein the retainer bar is in the inoperative position, the main hook is in the first main hook position and is engaged with the member to lock the retainer bar in the inoperative position, and
   - an unlocking configuration, wherein the main hook is in the second main hook position at a distance from the member, and the retainer bar is configured to pivot from the inoperative position to the operative position and from the operative position in the inoperative position, the method comprising at least the following steps:
      - when the retainer is in the inoperative position, tilting the cabin from the upright position into the fully tilted position; and
      - while the cabin is being tilted, moving the safety retainer from the locking configuration to the unlocking configuration by;
      - moving the hydraulic actuator so the hydraulic actuator moves the main hook from the first main hook position to the second main hook position;
      - pivoting the retainer bar from the inoperative position to the operative position; and
      - tilting back the cabin from the fully tilted position to the tilted position.

The third aspect of the disclosure may seek to provide a method to perform maintenance on the vehicle in a safe and easy way. A technical benefit may include having a method to perform maintenance of a vehicle in an easier manner, as the retainer bar does not need to be fixed to the chassis by the user, since it is already secured to the chassis, and decreasing the risk of the retainer bar falling or untimely pivoting in the operative position, as the main hook locks the retainer bar in place when the retainer bar is in the inoperative position.

Optionally in some examples, including in at least one preferred example, the safety retainer is further movable in a stand-by configuration, wherein the retainer bar is in the operative position, the main hook is in the first main hook position and at a distance from the member, and the method further comprises moving the safety retainer in the stand-by configuration by moving the main hook in the first main hook position, the retainer bar being in the operative position. A technical benefit may include preventing untimely engagement of the member and the main hook.

Optionally in some examples, including in at least one preferred example, the locking mechanism further comprises an auxiliary hook, movable between a first auxiliary hook position and a second auxiliary hook position, in the locking configuration, the auxiliary hook is in the first auxiliary hook position and is engaged with the member to lock the retainer bar in the inoperative position, in addition to the main hook being in the first main hook position and engaged with the member, and in the unlocking configuration, the auxiliary hook is in the first auxiliary hook position, is at a distance from the member and the retainer bar is configured to pivot in the operative position and in the inoperative position, in addition to the main hook being in the second main hook position and at a distance from the member, wherein moving the safety retainer from the locking configuration to the unlocking configuration further comprises:
- while the retainer bar is pivoted from the inoperative position to the operative position, the member moving the auxiliary hook from the first auxiliary hook position to the second auxiliary hook position; and
- escaping the auxiliary hook, by the member.

A technical benefit may include improving safety for a user, as when the main hook is in the second main hook position and does not lock the retainer bar in the inoperative position, the auxiliary hook still prevents the retainer bar to move from the inoperative position, while still allowing the retainer bar to be pivoted in the operative position.

Optionally in some examples, including in at least one preferred example, the auxiliary hook further comprises a sliding surface, and the method further comprises:
- tilting the cabin from the tilted position to the fully tilted position;
- moving the main hook form the first main hook position to the second main hook position, by the hydraulic actuator;
- pivoting the retainer bar from the operative position to the inoperative position;
- while the retainer bar is pivoting from the operative position to the inoperative position, the member sliding on the sliding surface; and
- while the retainer bar is pivoting from the operative position to the inoperative position, engaging the member with the auxiliary hook.

A technical benefit may include making the movement of the retainer bar from the operative position to the inoperative position easier, as well as allowing engagement of the member with the auxiliary hook, so that the retainer bar is secured in the inoperative position.

Optionally in some examples, including in at least one preferred example, the retainer bar further comprises a handle and pivoting the retainer bar from the inoperative to the operative position and pivoting the retainer bar from the operative position to the inoperative position is performed by the user manipulating the handle. A technical benefit may include making the pivoting of the retainer bar easier and safer for the user.

### BRIEF DESCRIPTION OF THE DRAWINGS

Examples are described in more detail below with reference to the appended drawings.
**[****FIG. 1****]** shows an exemplary vehicle according to an example, including a safety retainer according to an example, in perspective view.
**[****FIG. 2****]** is an enlarged view of detail II of FIG. 1.
**[****FIG. 3****]** shows a detail of a side view of the vehicle in a fully tilted position.
**[****FIG. 4****]** is a side view similar to FIG. 3 wherein the vehicle is in a tilted position.
**[****FIG. 5****]** is a detail of the safety retainer wherein a member is sliding on a sliding surface of the safety retainer.
**[****FIG. 6****]** is a view similar to FIG. 5 wherein the member is engaging with an auxiliary hook.
**[****FIG. 7****]** is a block diagram of a method for performing maintenance of a vehicle according to an example.

### DETAILED DESCRIPTION

The detailed description set forth below provides information and examples of the disclosed technology with sufficient detail to enable those skilled in the art to practice the disclosure.

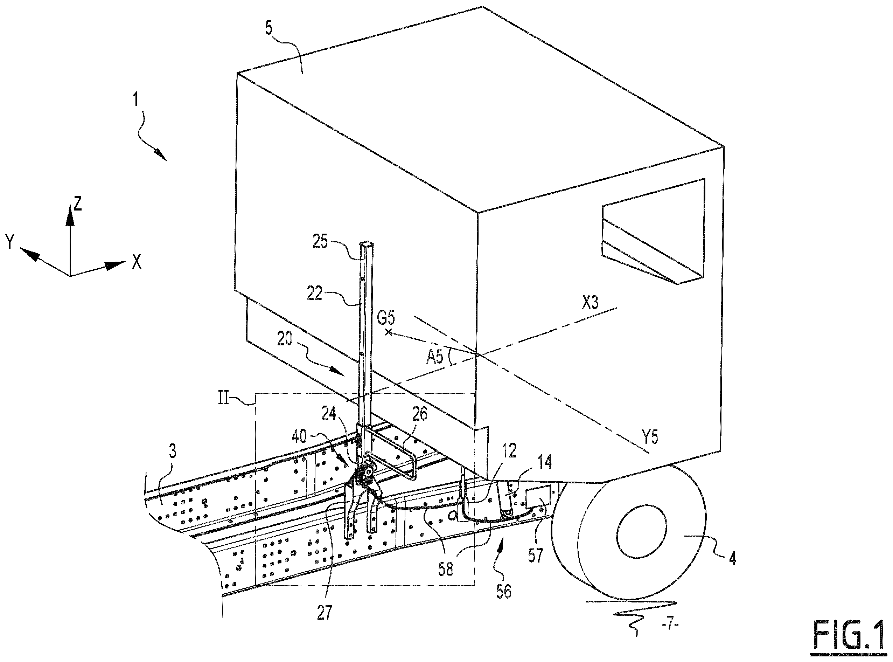

Figure 1 represents a vehicle 1 according to an example. The vehicle 1 is a heavy-duty vehicle, and is in particular a truck, and will also be referred to as truck 1.

The truck 1 comprises a chassis 3, wheels 4 and a cabin 5, schematically represented. The chassis 3 extends along a longitudinal axis X. A transversal axis Y and a height axis Z, perpendicular to the longitudinal axis X and to each other, are also defined. The wheels 4 are secured to the chassis 3, and are in contact with a ground 7. The wheels 4 are configured so that the truck 1 may travel on the ground 7.

The cabin 5 is configured so that a user of the truck 1 may enter the cabin 5 to drive the truck 1. In some examples, the cabin 5 has a weight that is superior or equal to four tons, for examples in cases where the truck 1 is a fire-truck or a truck carrying heavy construction equipment. The cabin 5 has a gravity center G5, visible on figure 1. The cabin 5 is pivotably secured to the chassis 3, and is configured to pivot, or tilt around a tilting axis Y5, which is parallel to the transversal axis Y. An axis X3, parallel to the longitudinal axis X, intersecting the tilting axis Y5 and coplanar to the gravity center G5 is further defined.

In some examples, the cabin 5 is configured to pivot between an upright position, a tilted position and a fully tilted position. In the upright position, a tilt angle A5 of the cabin is minimal. The tilt angle A5 is defined as the angle between the gravity center G5, the intersection between axes Y5 and X3 and the axis X3. When the cabin 5 is in the upright position, the tilt angle A5 is for example equal to 45 degrees. When the cabin 5 is in the tilted position, the tilt angle A5 is superior to the tilt angle A5 of the cabin 5 in the upright position, and is for example equal to 60°. When the cabin 5 is in the fully tilted position, the tilt angle A5 is superior to the tilt angle A5 of the cabin 5 in the tilted position; for example, it is strictly superior to 60°. In some examples, when the cabin 5 is in the fully tilted and tilted positions, the tilt angle A5 is strictly inferior to 90°. This means that, if the cabin 5 is not kept in the tilted or fully tilted position, the cabin 5 pivots back in the upright position under its own weight.

In some examples, when the cabin 5 is in the upright position, it covers elements of the truck 1, such as a motor of the truck 1, not represented, and when the cabin 5 is in the tilted or fully tilted positions, the motor of the truck 1 is accessible, for example for the user to perform maintenance on the motor, and more generally, on the truck 1.

The truck 1 further comprises a cabin lock 12, secured to the chassis 13. The cabin lock 12 is configured be locked or unlocked. When the cabin lock 12 is locked, the cabin lock 12 maintains the cabin 5 in the upright position. Locking of the cabin lock 12 typically prevents the cabin 5 from untimely pivoting from the upright to the tilted or fully tilted positions, for example when the truck 1 is being driven.

The truck 1 further comprises a cylinder 14, connected to the chassis 3 and to the cabin 5. In some examples, the cylinder 14 is a hydraulic cylinder, and is configured to tilt the cabin 5 from the upright position to the tilted and fully titled positions and from the fully tilted position to the tilted position and the upright position.

In some non-represented examples, the truck 1 comprises two cylinders 14, located on each side of the cabin 5 along the transversal axis Y.

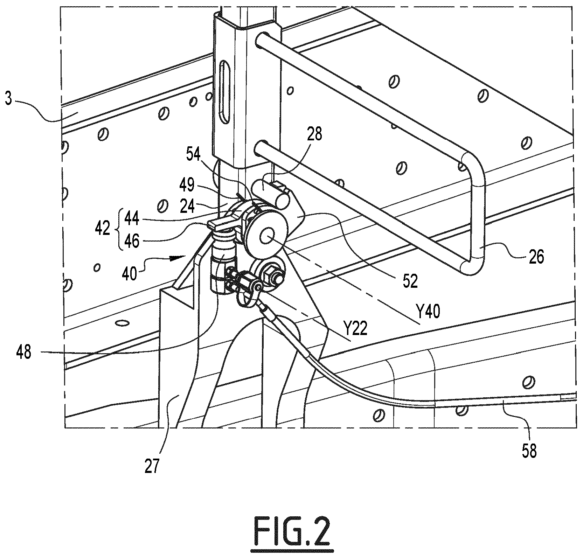

The truck 1 further comprises a safety retainer 20, for the cabin 5. The safety retainer 20 comprises a retainer bar 22. The retainer bar 22 is configured to pivot around a retainer axis Y22, visible on figures 2 to 6.

The retainer bar 22 is, for example, made of metal, such as steel. A first end 24 of the retainer bar 22 is secured to the chassis 3. Advantageously, as visible in the figures, the first end 24 is secured to the chassis 3 by being pivotably secured to a support 27, fixed to the chassis 3.

The retainer bar 22 is movable between an operative and an inoperative position. In particular, it is configured to pivot around the retainer axis Y22 between the operative position and the inoperative position. When the retainer bar is in the operative position and when the cabin 5 is in the tilted position, a second end 25 of the retainer bar 22 is in contact with the cabin 5, and the retainer bar 22 keeps the cabin 5 in the tilted position. In some examples, when the retainer bar 22 is in the operative position, forms an angle with the height axis Z.

In the inoperative position, the second end 25 of the retainer bar 22 is not in contact with the cabin 5. In some examples, in the inoperative position, the retainer bar 22 is vertical, in other words, parallel to the height axis Z.

In some examples, and as visible in figures 1 to 6, the retainer bar 22 comprises a handle 26, which is configured to be manipulated by the user when pivoting the retainer bar 22 from its operative position to its inoperative position and vice versa. For example, the user pulls on the handle 26 to pivot the retainer bar 22 from the operative position to the inoperative position and vice versa. In some examples, the handle 26 is configured to be accessible by the user from outside the truck 1. In particular, the handle 26 is reachable by the user while the user is standing on the ground 7, next to the truck 1.

The safety retainer 20 further comprises a member 28, fixedly secured to the retainer bar 22 and extending transversally from the retainer bar 22. In some examples, the member 28 is formed integrally with the retainer bar 22.

The safety retainer 20 further comprises a locking mechanism 40 comprising a main hook 42 that is configured to pivot around a locking mechanism axis Y40, parallel to the transversal axis Y. The main hook 42 is configured to move between a first main hook position and a second main hook position and vice versa, by pivoting around the locking mechanism axis Y40. The main hook 42 is configured to be engaged with the member 28 in the first main hook position. In the second main hook position, the main hook 42 is pivoted around the locking mechanism axis Y40 and is at a distance from the member 28.

In some examples and as visible in figures 2 to 6, the main hook 42 is in contact with the support 27 along the locking mechanism axis Y40.

In some examples, the main hook 42 comprises a central member 44 and a leg 46. The leg 46 extends from the central member 44 and in some examples, is formed integrally with the central member 44. In some examples, the leg 46 is used to pivot the main hook 42 from the first main position to the second main position and vice versa by interacting with a hydraulic actuator 48, included in the locking mechanism 40. The hydraulic actuator 48 is, for example, a cylinder and is movable between an extended position and a retracted position. In the extended position, the hydraulic actuator pushes the leg 46 to move the main hook 42 from the first main hook position to the second main hook position.

The locking mechanism 40 further comprises a main spring 49, partially visible on figure 2, with an end in contact with the main hook 42 and another end in contact with the chassis 3, or with the support 27. The main spring 49 is, in some examples, a torsion spring. The main spring 49 exerts a first load on the main hook 42, in order to bias the main hook 42 in the first main hook position.

In some examples, the locking mechanism 40 further comprises an auxiliary hook 52. The auxiliary hook 52 is movable between a first auxiliary hook position and a second auxiliary hook position by pivoting around the locking mechanism axis Y40. The auxiliary hook 52 is configured to be engaged with the member 28 in the first auxiliary hook position. In the second auxiliary position, the auxiliary hook 52 is pivoted around the locking mechanism axis Y40. The auxiliary hook 52 is configured to let the member 28 move freely with the retainer bar 22 when it is in the second auxiliary position.

In some examples and as visible in figures 2 to 6, the auxiliary hook 52 is in contact with the main hook 42 along the locking mechanism axis Y40 so that the main hook 42 is interposed between the support 27 and the auxiliary hook 52 along the locking mechanism axis Y40.

In some examples, the auxiliary hook 52 comprises a sliding surface 53, on which the member 28 is configured to slide when the retainer bar 22 pivots from the operative position to the inoperative position.

In some examples, the locking mechanism 40 further comprises an auxiliary spring 54. The auxiliary spring 54 is a torsion spring, with one end in contact with the auxiliary hook 52 and another end in contact with the support 27 or the chassis 3. The auxiliary spring 54 exerts a second load on the auxiliary hook 52 to bias the auxiliary hook 52 in the first auxiliary position.

Advantageously, the first load, exerted by the main spring 49 on the main hook 42, is superior to the second load.

The safety retainer 20 is movable between a locking configuration and an unlocking configuration. In the locking configuration, represented on figure 2, the retainer bar 22 is in the inoperative position, the main hook 42 in the first main hook position and the auxiliary hook 52 is in the first auxiliary hook position. In the locking configuration, the main hook 42 and the auxiliary hook 52 are engaged with the member 28. The first and second loads respectively exerted by the main and auxiliary springs 49, 54, prevent the main and auxiliary hooks 42 and 52 from pivoting around the locking mechanism axis Y40, so that they stay in the first main hook position and in the first auxiliary hook position, respectively. Therefore, the retainer bar 22 cannot pivot from the inoperative position to the operative position, and it is therefore locked in the inoperative position by the locking mechanism 40.

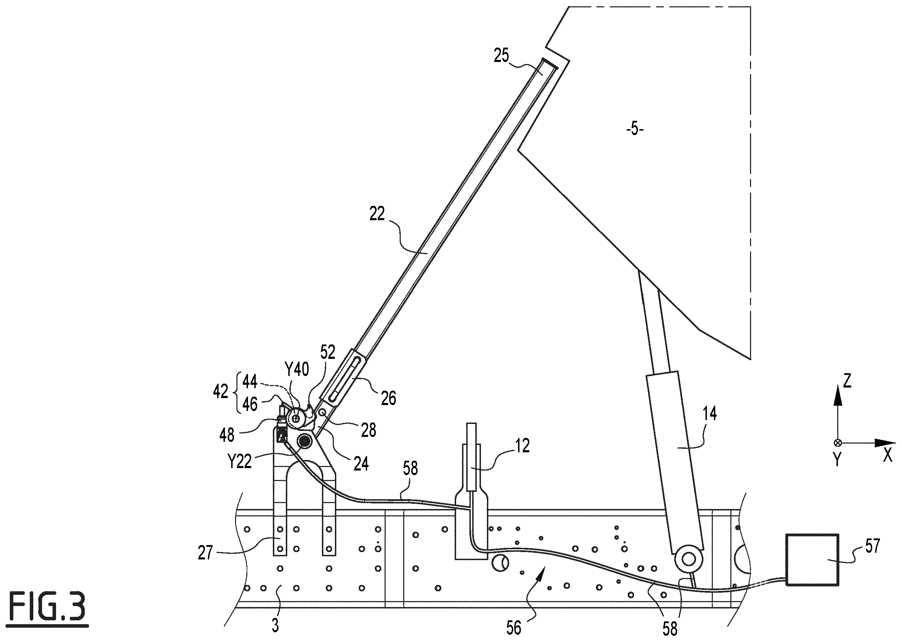

In the unlocking configuration, visible on figure 3, the retainer bar 22 is partly between the inoperative and the operative positions and is configured to pivot in the operative position or in the inoperative position, and the main hook 42 is in the second main position. The main hook 42 is at a distance from the member 28 so that the main hook 42 does not prevent a movement of the retainer bar 22. In some examples, in the unlocking configuration, in addition to the retainer bar 22 being configured to pivot in the inoperative position or in the operative position and the main hook 42 being in the second main hook position, the auxiliary hook 52 is in the first auxiliary position and at a distance from the member 28.

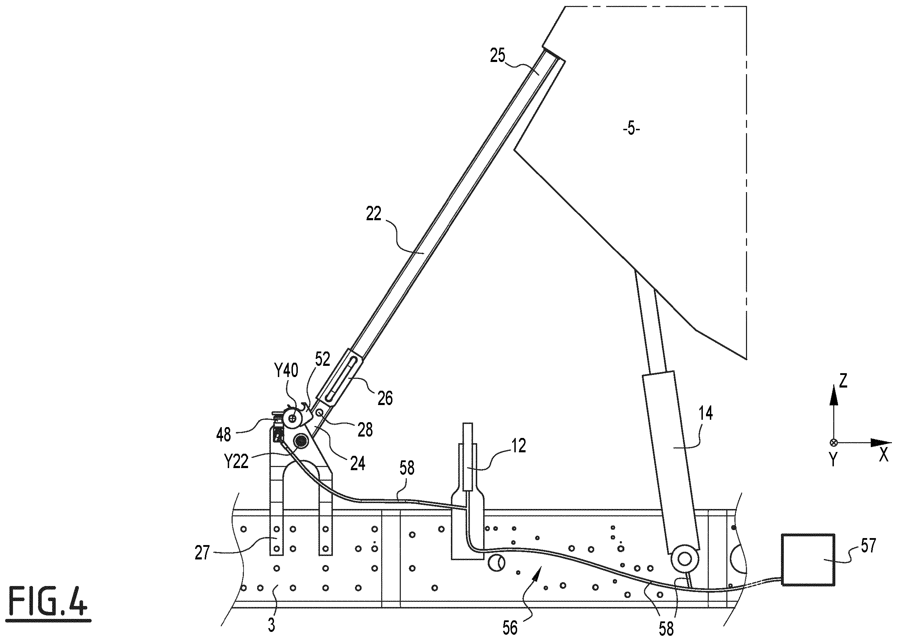

In some examples, the safety retainer 20 is further movable in a stand-by configuration, visible on figure 4. In the stand-by configuration, the main hook 42 and the auxiliary hook 52 are respectively in the first main hook position and in the first auxiliary hook position, and the retainer bar 22 is in the operative position. The member 28 is at a distance from the main hook 42 and the auxiliary hook 52.

The truck 1 further comprises a cabin hydraulic circuit 56, also called simply hydraulic circuit. The hydraulic circuit 56 is configured to lock and unlock the cabin lock 12, to actuate the cylinder 14 and to move the hydraulic actuator 48 in the extended and in the retracted positions. The hydraulic circuit 56 comprises a pump 57 and hydraulic lines 58. The cabin lock 12, the cylinder 14 and the hydraulic actuator 48 are fluidically connected to the hydraulic circuit 56, in particular to the hydraulic lines 58.

In some examples, the hydraulic line 58 connected to the hydraulic actuator 48 is connected in derivation to the hydraulic line connecting the pump 57 and the cabin lock 12.

The hydraulic circuit 56 is configured to be pressurized and depressurized, for example by the user controlling the pump 57 to operate, or by turning on the pump 57, and controlling the pump 57 to stop operating, or by turning off the pump 57. When the hydraulic circuit 56 is pressurized, it unlocks the cabin lock 12, it actuates the cylinder 14 to tilt the cabin 5 from the upright to the fully tilted position, or to resist against the cabin 5 tilting back into the upright position, and it moves the hydraulic actuator 48 in the extended position. A pressure in the hydraulic circuit 56 when the hydraulic circuit 56 is pressurized is advantageously comprised between 50 bars to 250 bars. When the hydraulic circuit 56 is depressurized, it locks the cabin lock 12, it does not actuate the cylinder 14, so that the cylinder 14 and does not resist against the cabin 5 tilting back into the upright position, and it moves the hydraulic actuator 48 is in the retracted position. In some examples, when the hydraulic circuit 56 is depressurized, the pressure in the hydraulic circuit 56 is advantageously below 50 bars.

The pump 57 is in some examples an electric pump, but in variant, it is a manual pump. In some examples, the hydraulic circuit 56 comprises only one pump 57, which is used to lock and unlock the cabin lock 12, to actuate the cylinder 14 and move the hydraulic actuator 48 in the extended and retracted positions.

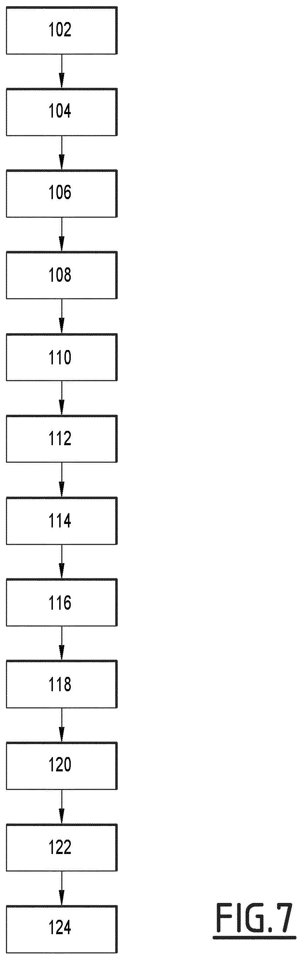

To perform maintenance, such as repairs, checks or inspections, on the truck 1, in particular on the motor, or on elements of the truck 1 covered by the cabin 5, it is necessary to tilt the cabin 5 away from the chassis 3 so that the motors and/or other elements on which maintenance is being performed are accessible by the user. A method for performing maintenance on the vehicle is now described, in reference to figure 7.

The cabin 5 in initially in the upright position, the hydraulic circuit 56 is depressurized. The cabin lock 12 is therefore locked, the cylinder 14 is not actuated and the hydraulic actuator 48 is in the retracted position. The main hook 42 is therefore in the first main hook position.

In addition to this, the safety retainer 20 is initially in a locking configuration.

To start the maintenance, when the retainer bar 22 is in the inoperative position, the hydraulic circuit 56 is pressurized, for example by the user turning on the pump 57. The hydraulic circuit 56 unlocks the cabin lock 12, therefore the cabin 5 is free to move, in particular in the fully tilted position. The cylinder 14 is actuated by the hydraulic circuit 56 and tilts the cabin 5 from the upright position to the fully tilted position at step 102.

The hydraulic circuit 56, being pressurized, also moves the hydraulic actuator 48 in the extended position which then pushes the leg 46 with enough force to move the main hook 42 against the first load exerted by the main spring 49 at step 104. This causes the main hook 42 to move in the second main hook position by pivoting around the locking mechanism axis Y40. The main hook 42 is therefore at a distance from the member 28 and only the auxiliary hook 52 locks the retainer bar 22 in the inoperative position.

The user then pivots the retainer bar 22 from the inoperative to the operative position at step 106. In some examples, step 106 is performed by the user manipulating the handle 26.

In some examples, while manually pivoting the retainer bar 22 from the inoperative to the operative position, the user exerts a force transmitted to the auxiliary hook 52 by the member 28, which overcomes the second load. The auxiliary hook 52 therefore pivots around the locking mechanism axis Y40 in the second auxiliary hook position at step 108, as the retainer bar 22 pivots around the retainer axis Y22 from the inoperative to the operative position, so that the member 28 is only in contact with the auxiliary hook 52, without being engaged with the auxiliary hook 52. The auxiliary hook 52 prevents the retainer bar 22 from falling, while still allowing the user to pivot the retainer bar 22 from the inoperative position to the operative position.

In some examples, once the auxiliary hook 52 is in the second auxiliary hook position, the member 28 escapes the auxiliary hook 52 at step 110, so that the auxiliary hook 52 and the member 28 are at a distance from each other. The auxiliary hook 52 pivots back in the first auxiliary hook position under the load exerted by the auxiliary spring 54. Thus, once the user has pivoted the retainer bar 22 in the operative position, the safety retainer 20 is in the unlocking configuration.

Step 106 is therefore performed at least partially concurrently with steps 108 and 110.

The cabin 5 is then tilted back from the fully tilted position to the tilted position at step 112. Step 112 is performed by depressurizing the hydraulic circuit 56, for example by the user turning off the pump 17, so that the cylinder 14 does not resist the movement of the cabin 5, which moves under its own weight from the fully tilted position to the tilted position, and comes into contact with the retainer bar 22. The retainer bar 22 prevents the cabin 5 from moving back into the upright position.

The hydraulic circuit 56 being depressurized, it also moves the hydraulic actuator 48 in the retracted position. Thus, the main hook 42 pivots around the locking mechanism axis Y40 from the second main hook position to the first main hook position under the load exerted by the main spring 49, or in other words, the safety retainer 20 moves in the stand-by configuration at step 114. The truck 1 is in the configuration of figure 4.

The user can now perform maintenance on the truck 1. The retainer bar 22 improves a safety of the user by preventing untimely tilting back of the cabin 5 from the tilted position to the upright position, which could injure the user while he or she is performing maintenance, or cause damage to the truck 1.

In some examples, once the maintenance operations are done, the user turns on the pump 17, pressurizing the hydraulic circuit 56. The cylinder 14 is actuated to tilt cabin 5 from the tilted position into the fully tilted position at step 116. The retainer bar 22 and the cabin 5 are not in contact anymore.

As the hydraulic circuit 56 is pressurized, the hydraulic circuit 56 moves the hydraulic actuator 48 in the extended position and pushes the leg 46 to move the main hook 42 from the first main hook position to the second main hook position at step 118.

Step 116 and step 118 are performed at least partially concurrently.

The user then manually pivots the retainer bar 22 from the operative position to the inoperative position at step 120. In some examples, step 120 is performed by the user manipulating the handle 26.

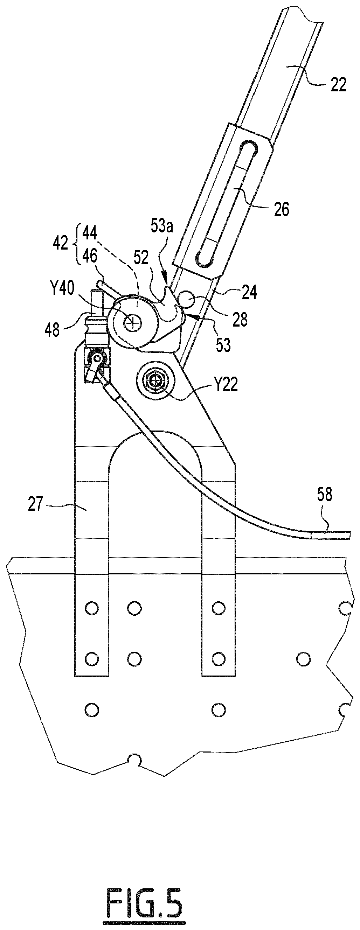

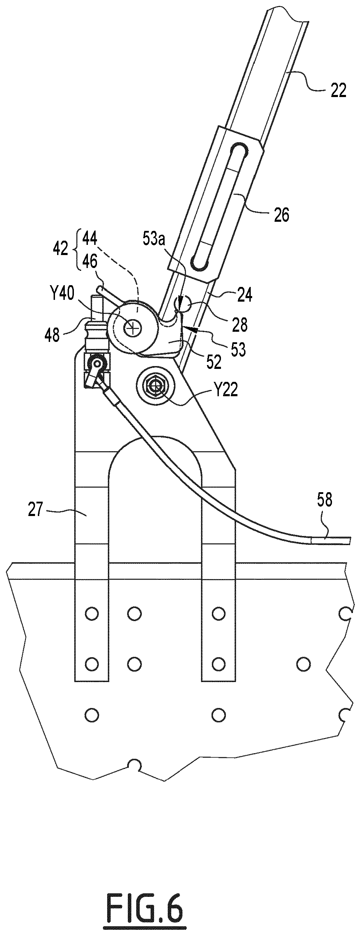

While the retainer bar 22 is being pivoted from the operative position to the inoperative position, the member 28 slides on the sliding surface 53 at step 122, as shown in figure 5, causing the auxiliary hook 52 to pivot from the first auxiliary hook position to the second auxiliary hook position under a weight of the member 28. The member 28 slides on the sliding surface 53 until the member 28 reaches an end 53a of the sliding surface 53, as shown in figure 6. When the member 28 is at the end 53a of the sliding surface 53, the member 28, which moves with the retainer bar 22, moves away from the end 53a of the sliding surface 53. The auxiliary hook 52 pivots back in the first auxiliary hook position and engages with the member 28 at step 124.

Once the retainer bar is in the inoperative position, the cabin 5 is tilted back in the upright position. The hydraulic circuit 56 is depressurized, for example by the user turning off the pump 17. The cabin lock 12 is locked, so that the cabin 5 stays in the upright position, the hydraulic actuator 48 is retracted, so that the main hook 42 pivots in the first main position. The safety retainer 20 is therefore back in the locking configuration.

The safety retainer 20 described herein simplifies the operation of the retainer bar 22. Indeed, the user does not have to secure and remove the retainer bar 22 every time a maintenance operation is performed. The retainer bar 22 is simply pivoted by the user when necessary. The retainer bar 22 does not need to be put away by the user once the maintenance operation is performed, which makes its operation more simple and safer, as it is locked in the inoperative position and does not risk falling. In addition to this, the user does not need to climb on the truck 1 to secure the retainer bar 22, which decreases the risk of injury, caused for example by the cabin 5 falling back in the upright position under its own weight, or by the user falling from the truck 1.

Although a specific order of method actions may be shown or described, the order of the actions may differ. In addition, two or more actions may be performed concurrently or with partial concurrence.

**Example 1:** A safety retainer 20, for a cabin 5 of a vehicle 1, the safety retainer 20 comprising:
- a retainer bar 22, configured to be secured to a chassis 3 of the vehicle 1, the retainer bar 22 being pivotable between an operative position and an inoperative position;
- a member 28 secured to the retainer bar 22 and extending transversally from the retainer bar 22; and
- a locking mechanism 40, configured to be secured to the chassis 3 of the vehicle 1, the locking mechanism 40 comprising:
   ∘ a main hook 42, movable between a first main hook position a second main hook position;
   ∘a hydraulic actuator 48, configured to move the main hook 42 from the first main hook position to the second main hook position; and
   ∘ a main spring 49, exerting a first load on the main hook 42 to bias the main hook 42 in the first main hook position,
the safety retainer 20 being movable between:
- a locking configuration, wherein the retainer bar 22 is in the inoperative position, the main hook 42 is in the first main hook position and is engaged with the member 28 to lock the retainer bar 22 in the inoperative position, and
- an unlocking configuration, wherein the main hook 42 is in the second main hook position and at a distance from the member 28, and the retainer bar 22 is configured to pivot from the inoperative position to the operative position and from the operative position to the inoperative position.

**Example 2:** The safety retainer 20 of example 1, wherein the main hook 42 comprises a central member 44, and a leg 46 extending from the central member 44 and wherein the hydraulic actuator 48 is configured to push the leg 46 to move the main hook 42 from the first main hook position to the second main hook position.

**Example 3:** The safety retainer 22 of any of examples 1 and 2 further movable in a stand-by configuration, wherein the retainer bar 22 is in the operative position, the main hook 42 is in the first main hook position and at a distance from the member 28.

**Example 4** The safety retainer 20 of any of examples 1 to 3, wherein
- the locking mechanism 40 further comprises an auxiliary hook 52, movable between a first auxiliary hook position and a second auxiliary hook position;
- in the locking configuration, the auxiliary hook 52 is in the first auxiliary hook position and is engaged with the member 28 to lock the retainer bar 22 in the inoperative position, in addition to the main hook 42 being in the first main hook position and engaged with the member 28; and
- in the unlocking configuration, the auxiliary hook 52 is in the first auxiliary hook position, is at a distance from the member 28 and the retainer bar 22 is configured to pivot in the operative position and in the inoperative position, in addition to the main hook 42 being in the second main hook position and at a distance from the member 28.

**Example 5:** The safety retainer 20 of example 4, wherein the auxiliary hook 52 comprises a sliding surface 53, and the member 28 is configured to slide on the sliding surface 53 when the retainer bar 22 pivots from the operative position to the inoperative position.

**Example 6:** The safety retainer 20 of examples 4 or 5, wherein the locking mechanism 40 further comprises an auxiliary spring 54, exerting a second load on the auxiliary hook 52 to bias the auxiliary hook 52 in the first auxiliary position.

**Example 7:** The safety retainer 22 of example 6, wherein the first load is superior to the second load.

**Example 8:** The safety retainer 20 of example 3 combined with any of examples 4 to 7, wherein, in the stand-by configuration, the auxiliary hook 54 is in the first auxiliary hook position and at a distance from the member 28, in addition to the main hook 42 being in the first main hook position and at a distance from the member 28 and the retainer bar being in the operative position.

**Example 9:** A vehicle 1 comprising:
- a chassis 3;
- a cabin 5, secured to the chassis 3, the cabin 5 being configured to pivot in an upright position, in a fully titled position and in a tilted position; and
- the safety retainer 20 of any of examples 1 to 8, wherein the retainer bar 22 and the locking mechanism 40 are secured to the chassis 3.

**Example 10:** The vehicle 1 of example 9, wherein a tilt angle A5 of the cabin 5 in the fully tilted position is superior to the tilt angle A5 of the cabin 5 in the tilted position.

**Example 11:** The vehicle 1 of example 10, wherein the tilt angle A5 of the cabin 5 in the fully tilted position is inferior to 90°.

**Example 12:** The vehicle 1 of any of examples 9 to 11, wherein, when the cabin 5 is in the upright position, the retainer bar 22 is in the inoperative position and, when the cabin 5 is in the tilted position, the retainer bar 22 in in the operative position.

**Example 13:** The vehicle 1 of any of examples 9 to 12 further comprising a cabin hydraulic circuit 56, configured to pivot the cabin 5 from the upright position to the fully tilted position, from the fully tilted position to the tilted position and vice versa.

**Example 14:** The vehicle 1 of any of examples 9 to 13, wherein the hydraulic actuator 48 is fluidically connected to the cabin hydraulic circuit 56.

**Example 15:** The vehicle 1 of any of examples 9 to 14, wherein the retainer bar 22 further comprises a handle 26, and the handle 26 is configured to be accessible by a user from outside the vehicle 1.

**Example 16:** A method for performing maintenance of a vehicle 1, the vehicle 1 comprising:
- a chassis 3;
- a cabin 5, secured to the chassis 3, the cabin 5 being configured to pivot in an upright position, in a fully tilted position and in a tilted position; and
- a safety retainer 20 comprising a retainer bar 22, secured to the chassis 3, the retainer bar 22 being pivotable between an operative position and an inoperative position, the safety retainer 20 comprising a member 28 secured to the retainer bar 22 and extending transversally from the retainer bar 22, the safety retainer 20 further comprising a locking mechanism 40 secured to the chassis 3, the locking mechanism 40 comprising:
   ∘ a main hook 42, movable between a first main hook position a second main hook position;
   ∘ a hydraulic actuator 48, configured to move the main hook 42 from the first main hook position to the second main hook position; and
   ∘ a main spring 49, exerting a first load on the main hook to bias the main hook 42 in the first main hook position,
the safety retainer 20 being movable between:
- a locking configuration, wherein the retainer bar 22 is in the inoperative position, the main hook 42 is in the first main hook position and is engaged with the member 28 to lock the retainer bar 22 in the inoperative position, and
- an unlocking configuration, wherein the main hook 42 is in the second main hook position and at a distance from the member 28, and the retainer bar 22 is configured to pivot from the inoperative position to the operative position and from the operative position to the inoperative position,
the method comprising at least the following steps:
- when the retainer bar 22 is in the inoperative position, tilting 102 the cabin 5 from the upright position into the fully tilted position; and
- while the cabin 5 is being tilted, moving the safety retainer 20 from the locking configuration to the unlocking configuration by:
   ∘ moving 104 the hydraulic actuator 48 so the hydraulic actuator 48 moves the main hook 42 from the first main hook position to the second main hook position;
   ∘ pivoting 106 the retainer bar 22 from the inoperative position to the operative position; and
- tilting 112 back the cabin 5 from the fully tilted position to the tilted position.

**Example 17:** The method of example 16, the safety retainer 20 being further movable in a stand-by configuration, wherein the retainer bar is in the operative position, the main hook 42 is in the first main hook position and at a distance from the member 28, wherein the method further comprises moving the safety retainer 20 in the stand-by configuration by moving 114 the main hook 42 in the first main hook position, the retainer bar 22 being in the operative position.

**Example 18:** The method of any of examples 16 to 17, wherein the locking mechanism 40 further comprises an auxiliary hook 52, movable between a first auxiliary hook position and a second auxiliary hook position, in the locking configuration, the auxiliary hook 52 is in the first auxiliary hook position and is engaged with the member 28 to lock the retainer bar 22 in the inoperative position, in addition to the main hook 42 being in the first main hook position and engaged with the member 28, and in the unlocking configuration, the auxiliary hook 52 is in the first auxiliary hook position, is at a distance from the member 28 and the retainer bar 22 is configured to pivot in the operative position and in the inoperative position, in addition to the main hook 42 being in the second main hook position and at a distance from the member 28, wherein moving the safety retainer 20 from the locking configuration to the unlocking configuration further comprises:
- while the retainer bar 22 is pivoted from the inoperative position to the operative position, the member 28 moving 108 the auxiliary hook 52 from the first auxiliary hook position to the second auxiliary hook position; and
- escaping 110 the auxiliary hook 52, by the member 28.

**Example 19:** The method of example 18, wherein the auxiliary hook 52 further comprises a sliding surface 23, and the method further comprises:
- tilting 116 the cabin 5 from the tilted position to the fully tilted position;
- moving 118 the main hook 42 from the first main hook position to the second main hook position, by the hydraulic actuator 48;
- pivoting 120 the retainer bar 22 from the operative position to the inoperative position;
- while the retainer bar 22 is pivoting from the operative position to the inoperative position, the member 28 sliding 122 on the sliding surface 23; and
- while the retainer bar 22 is pivoting from the operative position to the inoperative position, engaging 124 the member 28 with the auxiliary hook 52.

**Example 20:** The method of any of examples 16 to 19, wherein the retainer bar 22 further comprises a handle 26 and pivoting 106 the retainer bar 22 from the inoperative to the operative position and pivoting 120 the retainer bar 22 from the operative position to the inoperative position is performed by the user manipulating the handle 26.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

## Claims

1. A safety retainer (20), for a cabin (5) of a vehicle (1), the safety retainer (20) comprising:
- a retainer bar (22), configured to be secured to a chassis (3) of the vehicle (1), the retainer bar (22) being pivotable between an operative position and an inoperative position;
- a member (28) secured to the retainer bar (22) and extending transversally from the retainer bar (22); and
- a locking mechanism (40), configured to be secured to the chassis (3) of the vehicle (1), the locking mechanism (40) comprising:
∘ a main hook (42), movable between a first main hook position a second main hook position;
∘ a hydraulic actuator (48), configured to move the main hook (42) from the first main hook position to the second main hook position; and
∘ a main spring (49), exerting a first load on the main hook (42) to bias the main hook (42) in the first main hook position,
**characterized in that** the safety retainer (20) is movable between:
- a locking configuration, wherein the retainer bar (22) is in the inoperative position, the main hook (42) is in the first main hook position and is engaged with the member (28) to lock the retainer bar (22) in the inoperative position, and
- an unlocking configuration, wherein the main hook (42) is in the second main hook position and at a distance from the member (28), and the retainer bar (22) is configured to pivot from the inoperative position to the operative position and from the operative position to the inoperative position.

2. The safety retainer (20) of claim 1, wherein the main hook (42) comprises a central member (44) and a leg (46) extending from the central member (44) and wherein the hydraulic actuator (48) is configured to push the leg (46) to move the main hook (42) from the first main hook position to the second main hook position.

3. The safety retainer (20) of any of claims 1 and 2, further movable in a stand-by configuration, wherein the retainer bar (22) is in the operative position, the main hook (42) is in the first main hook position and at a distance from the member (28).

4. The safety retainer (20) of any of claims 1 to 3, wherein
- the locking mechanism (40) further comprises an auxiliary hook (52), movable between a first auxiliary hook position and a second auxiliary hook position;
- in the locking configuration, the auxiliary hook (52) is in the first auxiliary hook position and is engaged with the member (28) to lock the retainer bar (22) in the inoperative position, in addition to the main hook (42) being in the first main hook position and engaged with the member (28); and
- in the unlocking configuration, the auxiliary hook (52) is in the first auxiliary hook position, is at a distance from the member (28) and the retainer bar (22) is configured to pivot in the operative position and in the inoperative position, in addition to the main hook (42) being in the second main hook position and at a distance from the member (28).

5. The safety retainer (20) of claim 4, wherein the auxiliary hook (52) comprises a sliding surface (53), and the member (28) is configured to slide on the sliding surface (53) when the retainer bar (22) pivots from the operative position to the inoperative position.

6. The safety retainer (20) of claim 4 or 5, wherein the locking mechanism (40) further comprises an auxiliary spring (54), exerting a second load on the auxiliary hook (52) to bias the auxiliary hook (52) in the first auxiliary position.

7. The safety retainer (20) of claim 6, wherein the first load is superior to the second load.

8. The safety retainer (20) of claim 3 combined with any of claims 4 to 7, wherein, in the stand-by configuration, the auxiliary hook (52) is in the first auxiliary hook position and at a distance from the member (28), in addition to the main hook (42) being in the first main hook position and at a distance from the member (28) and the retainer bar being in the operative position.

9. A vehicle (1) comprising:
- a chassis (3);
- a cabin (5), secured to the chassis (3), the cabin (5) being configured to pivot in an upright position, in a fully titled position and in a tilted position; and
- the safety retainer (20) of any of claims 1 to 8, wherein the retainer bar (22) and the locking mechanism (40) are secured to the chassis (3).

10. The vehicle (1) of claim 9 further comprising a cabin hydraulic circuit (56), configured to pivot the cabin (5) from the upright position to the fully tilted position, from the fully tilted position to the tilted position and vice versa.

11. The vehicle (1) of any of claims 9 to 10, wherein the hydraulic actuator (48) is fluidically connected to the cabin hydraulic circuit (56).

12. A method for performing maintenance of a vehicle (1), the vehicle (1) comprising:
- a chassis (3);
- a cabin (5), secured to the chassis (3), the cabin (5) being configured to pivot in an upright position, in a fully tilted position and in a tilted position; and
- a safety retainer (20) comprising a retainer bar (22), secured to the chassis (3), the retainer bar (22) being pivotable between an operative position and an inoperative position, the safety retainer (20) comprising a member (28) secured to the retainer bar (22) and extending transversally from the retainer bar (22), the safety retainer (20) further comprising a locking mechanism (40) secured to the chassis (3), the locking mechanism (40) comprising:
∘ a main hook (42), movable between a first main hook position a second main hook position;
∘ a hydraulic actuator (48), configured to move the main hook (42) from the first main hook position to the second main hook position; and
∘ a main spring (49), exerting a first load on the main hook to bias the main hook (42) in the first main hook position,
**characterized in that** the safety retainer (20) is movable between:
- a locking configuration, wherein the retainer bar (22) is in the inoperative position, the main hook (42) is in the first main hook position and is engaged with the member (28) to lock the retainer bar (22) in the inoperative position, and
- an unlocking configuration, wherein the main hook (42) is in the second main hook position and at a distance from the member (28), and the retainer bar (22) is configured to pivot from the inoperative position to the operative position and from the operative position to the inoperative position,
the method comprising at least the following steps:
- when the retainer bar (22) is in the inoperative position, tilting (102) the cabin (5) from the upright position into the fully tilted position; and
- while the cabin (5) is being tilted, moving the safety retainer (20) from the locking configuration to the unlocking configuration by:
∘ moving (104) the hydraulic actuator (48) so the hydraulic actuator (48) moves the main hook (42) from the first main hook position to the second main hook position;
∘ pivoting (106) the retainer bar (22) from the inoperative position to the operative position; and
- tilting (112) back the cabin (5) from the fully tilted position to the tilted position.

13. The method of claim 12, the safety retainer (20) being further movable in a stand-by configuration, wherein the main hook (42) is in the first main hook position and at a distance from the member (28), wherein the method further comprises moving the safety retainer (20) in the stand-by configuration by moving (114) the main hook (42) in the first main hook position, the retainer bar (22) being in the operative position.

14. The method of any of claims 12 to 13, wherein the locking mechanism (40) further comprises an auxiliary hook (52), movable between a first auxiliary hook position and a second auxiliary hook position,
in the locking configuration, the auxiliary hook (52) is in the first auxiliary hook position and is engaged with the member (28) to lock the retainer bar (22) in the inoperative position, in addition to the main hook (42) being in the first main hook position and engaged with the member (28), and in the unlocking configuration, the auxiliary hook (52) is in the first auxiliary hook position, is at a distance from the member (28) and the retainer bar (22) is configured to pivot in the operative position and in the inoperative position, in addition to the main hook (42) being in the second main hook position and at a distance from the member (28), wherein moving the safety retainer (20) from the locking configuration to the unlocking configuration further comprises:
- while the retainer bar (22) is pivoted from the inoperative position to the operative position, the member (28) moving (108) the auxiliary hook (52) from the first auxiliary hook position to the second auxiliary hook position; and
- escaping (110) the auxiliary hook (52), by the member (28).

15. The method of claim 14, wherein the auxiliary hook (52) further comprises a sliding surface (23), and the method further comprises:
- tilting (116) the cabin (5) from the tilted position to the fully tilted position;
- moving (118) the main hook (42) from the first main hook position to the second main hook position, by the hydraulic actuator (48);
- pivoting (120) the retainer bar (22) from the operative position to the inoperative position;
- while the retainer bar (22) is pivoting from the operative position to the inoperative position, the member (28) sliding (122) on the sliding surface (23); and
- while the retainer bar (22) is pivoting from the operative position to the inoperative position, engaging (124) the member (28) with the auxiliary hook (52).

## Patentansprüche

1. Eine Sicherheitsarretierung (20) für eine Kabine (5) eines Fahrzeugs (1), wobei die Sicherheitsarretierung (20) umfasst:
- eine Arretierungsstange (22), die dazu ausgelegt ist, an einem Fahrgestell (3) des Fahrzeugs (1) befestigt zu werden, wobei die Arretierungsstange (22) zwischen einer Betriebsstellung und einer Nichtbetriebsstellung schwenkbar ist;
- ein Element (28), das an der Arretierungsstange (22) befestigt ist und sich quer von der Arretierungsstange (22) erstreckt; und
- einen Verriegelungsmechanismus (40), der dazu ausgelegt ist, an dem Fahrgestell (3) des Fahrzeugs (1) befestigt zu werden, wobei der Verriegelungsmechanismus (40) umfasst:
∘ einen Haupthaken (42), der zwischen einer ersten Haupthakenstellung einer zweiten Haupthakenstellung bewegbar ist;
∘ einen hydraulischen Aktuator (48), der dazu ausgelegt ist, den Haupthaken (42) von der ersten Haupthakenstellung in die zweite Haupthakenstellung zu bewegen; und
∘ eine Hauptfeder (49), die eine erste Last auf den Haupthaken (42) ausübt, um den Haupthaken (42) in die erste Haupthakenstellung vorzuspannen,
**dadurch gekennzeichnet, dass** die Sicherheitsarretierung (20) zwischen Folgendem bewegbar ist:
- einer Verriegelungskonfiguration, wobei sich die Arretierungsstange (22) in der Nichtbetriebsstellung befindet, sich der Haupthaken (42) in der ersten Haupthakenstellung befindet und mit dem Element (28) in Eingriff steht, um die Arretierungsstange (22) in der Nichtbetriebsstellung zu verriegeln, und
- einer Entriegelungskonfiguration, wobei sich der Haupthaken (42) in der zweiten Haupthakenstellung und in einem Abstand von dem Element (28) befindet und die Arretierungsstange (22) dazu ausgelegt ist, von der Nichtbetriebsstellung in die Betriebsstellung und von der Betriebsstellung in die Nichtbetriebsstellung zu schwenken.

2. Die Sicherheitsarretierung (20) nach Anspruch 1, wobei der Haupthaken (42) ein zentrales Element (44) und einen sich von dem zentralen Element (44) erstreckenden Schenkel (46) umfasst und wobei der hydraulische Aktuator (48) dazu ausgelegt ist, den Schenkel (46) zu drücken, um den Haupthaken (42) von der ersten Haupthakenstellung in die zweite Haupthakenstellung zu bewegen.

3. Die Sicherheitsarretierung (20) nach einem der Ansprüche 1 und 2, die ferner in einer Bereitschaftskonfiguration bewegbar ist, wobei sich die Arretierungsstange (22) in der Betriebsstellung befindet, sich der Haupthaken (42) in der ersten Haupthakenstellung befindet und in einem Abstand von dem Element (28) ist.

4. Die Sicherheitsarretierung (20) nach einem der Ansprüche 1 bis 3, wobei
- der Verriegelungsmechanismus (40) ferner einen Hilfshaken (52) umfasst, der zwischen einer ersten Hilfshakenstellung und einer zweiten Hilfshakenstellung bewegbar ist;
- in der Verriegelungskonfiguration sich der Hilfshaken (52) in der ersten Hilfshakenstellung befindet und mit dem Element (28) in Eingriff steht, um die Arretierungsstange (22) in der Nichtbetriebsstellung zu verriegeln, zusätzlich dazu, dass sich der Haupthaken (42) in der ersten Haupthakenstellung befindet und mit dem Element (28) in Eingriff steht; und
- in der Entriegelungskonfiguration sich der Hilfshaken (52) in der ersten Hilfshakenstellung befindet, in einem Abstand von dem Element (28) ist und die Arretierungsstange (22) dazu ausgelegt ist, in die Betriebsstellung und in die Nichtbetriebsstellung zu schwenken, zusätzlich dazu, dass sich der Haupthaken (42) in der zweiten Haupthakenstellung und in einem Abstand von dem Element (28) befindet.

5. Die Sicherheitsarretierung (20) nach Anspruch 4, wobei der Hilfshaken (52) eine Gleitfläche (53) umfasst und das Element (28) dazu ausgelegt ist, auf der Gleitfläche (53) zu gleiten, wenn die Arretierungsstange (22) von der Betriebsstellung in die Nichtbetriebsstellung schwenkt.

6. Die Sicherheitsarretierung (20) nach Anspruch 4 oder 5, wobei der Verriegelungsmechanismus (40) ferner eine Hilfsfeder (54) umfasst, die eine zweite Last auf den Hilfshaken (52) ausübt, um den Hilfshaken (52) in die erste Hilfsstellung vorzuspannen.

7. Die Sicherheitsarretierung (20) nach Anspruch 6, wobei die erste Last größer als die zweite Last ist.

8. Die Sicherheitsarretierung (20) nach Anspruch 3 in Kombination mit einem der Ansprüche 4 bis 7, wobei sich in der Bereitschaftskonfiguration der Hilfshaken (52) in der ersten Hilfshakenstellung und in einem Abstand von dem Element (28) befindet, zusätzlich dazu, dass sich der Haupthaken (42) in der ersten Haupthakenstellung und in einem Abstand von dem Element (28) befindet und die Arretierungsstange sich in der Betriebsstellung befindet.

9. Ein Fahrzeug (1), umfassend:
- ein Fahrgestell (3);
- eine Kabine (5), die an dem Fahrgestell (3) befestigt ist, wobei die Kabine (5) dazu ausgelegt ist, in eine aufrechte Stellung, in eine vollständig gekippte Stellung und in eine gekippte Stellung zu schwenken; und
- die Sicherheitsarretierung (20) nach einem der Ansprüche 1 bis 8, wobei die Arretierungsstange (22) und der Verriegelungsmechanismus (40) an dem Fahrgestell (3) befestigt sind.

10. Das Fahrzeug (1) nach Anspruch 9, ferner umfassend einen hydraulischen Kabinenkreislauf (56), der dazu ausgelegt ist, die Kabine (5) von der aufrechten Stellung in die vollständig gekippte Stellung, von der vollständig gekippten Stellung in die gekippte Stellung und umgekehrt zu schwenken.

11. Das Fahrzeug (1) nach einem der Ansprüche 9 bis 10, wobei der hydraulische Aktuator (48) fluidisch mit dem hydraulischen Kabinenkreislauf (56) verbunden ist.

12. Ein Verfahren zur Durchführung einer Wartung eines Fahrzeugs (1), wobei das Fahrzeug (1) umfasst:
- ein Fahrgestell (3);
- eine Kabine (5), die an dem Fahrgestell (3) befestigt ist, wobei die Kabine (5) dazu ausgelegt ist, in eine aufrechte Stellung, in eine vollständig gekippte Stellung und in eine gekippte Stellung zu schwenken; und
- eine Sicherheitsarretierung (20), umfassend eine Arretierungsstange (22), die an dem Fahrgestell (3) befestigt ist, wobei die Arretierungsstange (22) zwischen einer Betriebsstellung und einer Nichtbetriebsstellung schwenkbar ist, wobei die Sicherheitsarretierung (20) ein Element (28) umfasst, das an der Arretierungsstange (22) befestigt ist und sich quer von der Arretierungsstange (22) erstreckt, wobei die Sicherheitsarretierung (20) ferner einen an dem Fahrgestell (3) befestigten Verriegelungsmechanismus (40) umfasst, wobei der Verriegelungsmechanismus (40) umfasst:
∘ ein Haupthaken (42), zwischen einer ersten Haupthakenposition und einer zweiten Haupthakenposition beweglich;
∘ ein hydraulischer Aktuator (48), der dazu eingerichtet ist, den Haupthaken (42) von der ersten Haupthakenposition in die zweite Haupthakenposition zu bewegen; und
∘ eine Hauptfeder (49), die eine erste Last auf den Haupthaken ausübt, um den Haupthaken (42) in die erste Haupthakenposition vorzuspannen,
**dadurch gekennzeichnet, dass** die Sicherheitsrückhalteeinrichtung (20) zwischen Folgendem beweglich ist:
- einer Verriegelungskonfiguration, wobei sich die Sicherungsstange (22) in der nicht-operativen Position befindet, sich der Haupthaken (42) in der ersten Haupthakenposition befindet und mit dem Glied (28) in Eingriff steht, um die Sicherungsstange (22) in der nicht-operativen Position zu verriegeln, und
- einer Entriegelungskonfiguration, wobei sich der Haupthaken (42) in der zweiten Haupthakenposition und in einem Abstand von dem Glied (28) befindet und die Sicherungsstange (22) dazu eingerichtet ist, von der nicht-operativen Position in die operative Position und von der operativen Position in die nicht-operative Position zu schwenken,
wobei das Verfahren mindestens die folgenden Schritte umfasst:
- wenn sich die Sicherungsstange (22) in der nicht-operativen Position befindet, Neigen (102) der Kabine (5) von der aufrechten Position in die vollständig geneigte Position; und
- während die Kabine (5) geneigt wird, Bewegen der Sicherheitsrückhalteeinrichtung (20) von der Verriegelungskonfiguration in die Entriegelungskonfiguration durch:
∘ Bewegen (104) des hydraulischen Aktuators (48), so dass der hydraulische Aktuator (48) den Haupthaken (42) von der ersten Haupthakenposition in die zweite Haupthakenposition bewegt;
∘ Schwenken (106) der Sicherungsstange (22) von der nicht-operativen Position in die operative Position; und
- Zurückneigen (112) der Kabine (5) von der vollständig geneigten Position in die geneigte Position.

13. Verfahren nach Anspruch 12, wobei die Sicherheitsrückhalteeinrichtung (20) ferner in einer Stand-by-Konfiguration beweglich ist, wobei sich der Haupthaken (42) in der ersten Haupthakenposition und in einem Abstand von dem Glied (28) befindet, wobei das Verfahren ferner das Bewegen der Sicherheitsrückhalteeinrichtung (20) in die Stand-by-Konfiguration durch Bewegen (114) des Haupthakens (42) in der ersten Haupthakenposition umfasst, wobei sich die Sicherungsstange (22) in der operativen Position befindet.

14. Verfahren nach einem der Ansprüche 12 bis 13, wobei der Verriegelungsmechanismus (40) ferner einen Hilfshaken (52) umfasst, der zwischen einer ersten Hilfshakenposition und einer zweiten Hilfshakenposition beweglich ist,
wobei sich in der Verriegelungskonfiguration der Hilfshaken (52) in der ersten Hilfshakenposition befindet und mit dem Glied (28) in Eingriff steht, um die Sicherungsstange (22) in der nicht-operativen Position zu verriegeln, zusätzlich dazu, dass sich der Haupthaken (42) in der ersten Haupthakenposition befindet und mit dem Glied (28) in Eingriff steht, und wobei sich in der Entriegelungskonfiguration der Hilfshaken (52) in der ersten Hilfshakenposition befindet, sich in einem Abstand von dem Glied (28) befindet und die Sicherungsstange (22) dazu eingerichtet ist, in die operative Position und in die nicht-operative Position zu schwenken, zusätzlich dazu, dass sich der Haupthaken (42) in der zweiten Haupthakenposition und in einem Abstand von dem Glied (28) befindet, wobei das Bewegen der Sicherheitsrückhalteeinrichtung (20) von der Verriegelungskonfiguration in die Entriegelungskonfiguration ferner Folgendes umfasst:
- während die Sicherungsstange (22) von der nicht-operativen Position in die operative Position geschwenkt wird, Bewegen (108) des Hilfshakens (52) durch das Glied (28) von der ersten Hilfshakenposition in die zweite Hilfshakenposition; und
- Entkommen (110) des Hilfshakens (52) durch das Glied (28).

15. Verfahren nach Anspruch 14, wobei der Hilfshaken (52) ferner eine Gleitfläche (23) umfasst und das Verfahren ferner Folgendes umfasst:
- Neigen (116) der Kabine (5) von der geneigten Position in die vollständig geneigte Position;
- Bewegen (118) des Haupthakens (42) von der ersten Haupthakenposition in die zweite Haupthakenposition durch den hydraulischen Aktuator (48);
- Schwenken (120) der Sicherungsstange (22) von der operativen Position in die nicht-operative Position;
- während die Sicherungsstange (22) von der operativen Position in die nicht-operative Position schwenkt, Gleiten (122) des Glieds (28) auf der Gleitfläche (23); und
- während die Sicherungsstange (22) von der operativen Position in die nicht-operative Position schwenkt, In-Eingriff-Bringen (124) des Glieds (28) mit dem Hilfshaken (52).

## Revendications

1. Un dispositif de retenue de sécurité (20), pour une cabine (5) d'un véhicule (1), le dispositif de retenue de sécurité (20) comprenant :
- une barre de retenue (22), configurée pour être fixée à un châssis (3) du véhicule (1), la barre de retenue (22) étant pivotante entre une position opérationnelle et une position non opérationnelle ;
- un élément (28) fixé à la barre de retenue (22) et s'étendant transversalement à partir de la barre de retenue (22) ; et
- un mécanisme de verrouillage (40), configuré pour être fixé au châssis (3) du véhicule (1), le mécanisme de verrouillage (40) comprenant :
∘ un crochet principal (42), mobile entre une première position du crochet principal et une deuxième position du crochet principal ;
∘ un actionneur hydraulique (48), configuré pour déplacer le crochet principal (42) de la première position du crochet principal à la deuxième position du crochet principal ; et
∘ un ressort principal (49), exerçant une première charge sur le crochet principal (42) pour solliciter le crochet principal (42) dans la première position du crochet principal,
**caractérisé en ce que** le dispositif de retenue de sécurité (20) est mobile entre :
- une configuration de verrouillage, dans laquelle la barre de retenue (22) est dans la position non opérationnelle, le crochet principal (42) est dans la première position du crochet principal et est engagé avec l'élément (28) pour verrouiller la barre de retenue (22) dans la position non opérationnelle, et
- une configuration de déverrouillage, dans laquelle le crochet principal (42) est dans la deuxième position du crochet principal et à distance de l'élément (28), et la barre de retenue (22) est configurée pour pivoter de la position non opérationnelle à la position opérationnelle et de la position opérationnelle à la position non opérationnelle.

2. Le dispositif de retenue de sécurité (20) de la revendication 1, dans lequel le crochet principal (42) comprend un élément central (44) et une patte (46) s'étendant à partir de l'élément central (44) et dans lequel l'actionneur hydraulique (48) est configuré pour pousser la patte (46) afin de déplacer le crochet principal (42) de la première position du crochet principal à la deuxième position du crochet principal.

3. Le dispositif de retenue de sécurité (20) de l'une quelconque des revendications 1 et 2, étant en outre mobile dans une configuration d'attente, dans laquelle la barre de retenue (22) est dans la position opérationnelle, le crochet principal (42) est dans la première position du crochet principal et à distance de l'élément (28).

4. Le dispositif de retenue de sécurité (20) de l'une quelconque des revendications 1 à 3, dans lequel
- le mécanisme de verrouillage (40) comprend en outre un crochet auxiliaire (52), mobile entre une première position du crochet auxiliaire et une deuxième position du crochet auxiliaire ;
- dans la configuration de verrouillage, le crochet auxiliaire (52) est dans la première position du crochet auxiliaire et est engagé avec l'élément (28) pour verrouiller la barre de retenue (22) dans la position non opérationnelle, en plus du fait que le crochet principal (42) est dans la première position du crochet principal et engagé avec l'élément (28) ; et
- dans la configuration de déverrouillage, le crochet auxiliaire (52) est dans la première position du crochet auxiliaire, est à distance de l'élément (28) et la barre de retenue (22) est configurée pour pivoter dans la position opérationnelle et dans la position non opérationnelle, en plus du fait que le crochet principal (42) est dans la deuxième position du crochet principal et à distance de l'élément (28).

5. Le dispositif de retenue de sécurité (20) de la revendication 4, dans lequel le crochet auxiliaire (52) comprend une surface de coulissement (53), et l'élément (28) est configuré pour coulisser sur la surface de coulissement (53) lorsque la barre de retenue (22) pivote de la position opérationnelle à la position non opérationnelle.

6. Le dispositif de retenue de sécurité (20) de la revendication 4 ou 5, dans lequel le mécanisme de verrouillage (40) comprend en outre un ressort auxiliaire (54), exerçant une deuxième charge sur le crochet auxiliaire (52) pour solliciter le crochet auxiliaire (52) dans la première position auxiliaire.

7. Le dispositif de retenue de sécurité (20) de la revendication 6, dans lequel la première charge est supérieure à la deuxième charge.

8. Le dispositif de retenue de sécurité (20) de la revendication 3 combinée à l'une quelconque des revendications 4 à 7, dans lequel, dans la configuration d'attente, le crochet auxiliaire (52) est dans la première position du crochet auxiliaire et à distance de l'élément (28), en plus du fait que le crochet principal (42) est dans la première position du crochet principal et à distance de l'élément (28) et que la barre de retenue est dans la position opérationnelle.

9. Un véhicule (1) comprenant :
- un châssis (3) ;
- une cabine (5), fixée au châssis (3), la cabine (5) étant configurée pour pivoter dans une position verticale, dans une position complètement inclinée et dans une position inclinée ; et
- le dispositif de retenue de sécurité (20) de l'une quelconque des revendications 1 à 8, dans lequel la barre de retenue (22) et le mécanisme de verrouillage (40) sont fixés au châssis (3).

10. Le véhicule (1) de la revendication 9 comprenant en outre un circuit hydraulique de cabine (56), configuré pour faire pivoter la cabine (5) de la position verticale à la position complètement inclinée, de la position complètement inclinée à la position inclinée et inversement.

11. Le véhicule (1) de l'une quelconque des revendications 9 à 10, dans lequel l'actionneur hydraulique (48) est relié fluidiquement au circuit hydraulique de cabine (56).

12. Un procédé pour effectuer la maintenance d'un véhicule (1), le véhicule (1) comprenant :
- un châssis (3) ;
- une cabine (5), fixée au châssis (3), la cabine (5) étant configurée pour pivoter dans une position verticale, dans une position complètement inclinée et dans une position inclinée ; et
- un dispositif de retenue de sécurité (20) comprenant une barre de retenue (22), fixée au châssis (3), la barre de retenue (22) étant pivotante entre une position opérationnelle et une position non opérationnelle, le dispositif de retenue de sécurité (20) comprenant un élément (28) fixé à la barre de retenue (22) et s'étendant transversalement à partir de la barre de retenue (22), le dispositif de retenue de sécurité (20) comprenant en outre un mécanisme de verrouillage (40) fixé au châssis (3), le mécanisme de verrouillage (40) comprenant :
∘ un crochet principal (42), mobile entre une première position du crochet principal et une seconde position du crochet principal ;
∘ un actionneur hydraulique (48), configuré pour déplacer le crochet principal (42) de la première position du crochet principal à la seconde position du crochet principal ; et
∘ un ressort principal (49), exerçant une première charge sur le crochet principal afin de solliciter le crochet principal (42) vers la première position du crochet principal,
**caractérisé en ce que** le dispositif de retenue de sécurité (20) est mobile entre :
- une configuration de verrouillage, dans laquelle la barre de retenue (22) est dans la position inactive, le crochet principal (42) est dans la première position du crochet principal et est en prise avec l'élément (28) pour verrouiller la barre de retenue (22) dans la position inactive, et
- une configuration de déverrouillage, dans laquelle le crochet principal (42) est dans la seconde position du crochet principal et à distance de l'élément (28), et la barre de retenue (22) est configurée pour pivoter de la position inactive à la position active et de la position active à la position inactive,
le procédé comprenant au moins les étapes suivantes :
- lorsque la barre de retenue (22) est dans la position inactive, inclinaison (102) de la cabine (5) de la position verticale à la position entièrement inclinée ; et
- pendant que la cabine (5) est inclinée, déplacement du dispositif de retenue de sécurité (20) de la configuration de verrouillage à la configuration de déverrouillage par :
∘ déplacement (104) de l'actionneur hydraulique (48) de sorte que l'actionneur hydraulique (48) déplace le crochet principal (42) de la première position du crochet principal à la seconde position du crochet principal ;
∘ pivotement (106) de la barre de retenue (22) de la position inactive à la position active ; et
- inclinaison (112) en retour de la cabine (5) de la position entièrement inclinée à la position inclinée.

13. Procédé selon la revendication 12, le dispositif de retenue de sécurité (20) étant en outre mobile dans une configuration d'attente, dans laquelle le crochet principal (42) est dans la première position du crochet principal et à distance de l'élément (28), le procédé comprenant en outre le déplacement du dispositif de retenue de sécurité (20) dans la configuration d'attente par déplacement (114) du crochet principal (42) dans la première position du crochet principal, la barre de retenue (22) étant dans la position active.

14. Procédé selon l'une quelconque des revendications 12 à 13, dans lequel le mécanisme de verrouillage (40) comprend en outre un crochet auxiliaire (52), mobile entre une première position du crochet auxiliaire et une seconde position du crochet auxiliaire,
dans la configuration de verrouillage, le crochet auxiliaire (52) est dans la première position du crochet auxiliaire et est en prise avec l'élément (28) pour verrouiller la barre de retenue (22) dans la position inactive, en plus du fait que le crochet principal (42) est dans la première position du crochet principal et en prise avec l'élément (28), et dans la configuration de déverrouillage, le crochet auxiliaire (52) est dans la première position du crochet auxiliaire, est à distance de l'élément (28) et la barre de retenue (22) est configurée pour pivoter dans la position active et dans la position inactive, en plus du fait que le crochet principal (42) est dans la seconde position du crochet principal et à distance de l'élément (28), le déplacement du dispositif de retenue de sécurité (20) de la configuration de verrouillage à la configuration de déverrouillage comprenant en outre :
- pendant que la barre de retenue (22) pivote de la position inactive à la position active, déplacement (108) par l'élément (28) du crochet auxiliaire (52) de la première position du crochet auxiliaire à la seconde position du crochet auxiliaire ; et
- échappement (110) du crochet auxiliaire (52), par l'élément (28).

15. Procédé selon la revendication 14, dans lequel le crochet auxiliaire (52) comprend en outre une surface de glissement (23), et le procédé comprend en outre :
- inclinaison (116) de la cabine (5) de la position inclinée à la position entièrement inclinée ;
- déplacement (118) du crochet principal (42) de la première position du crochet principal à la seconde position du crochet principal, par l'actionneur hydraulique (48) ;
- pivotement (120) de la barre de retenue (22) de la position active à la position inactive ;
- pendant que la barre de retenue (22) pivote de la position active à la position inactive, glissement (122) de l'élément (28) sur la surface de glissement (23) ; et
- pendant que la barre de retenue (22) pivote de la position active à la position inactive, mise en prise (124) de l'élément (28) avec le crochet auxiliaire (52).
